# EUROPÄISCHE PATENTSCHRIFT

(11) **EP 2 905 306 B1**
(45) Veröffentlichungstag und Bekanntmachung des Hinweises auf die Patenterteilung: **02.11.2016**
(21) Anmeldenummer: 14198474.0
(22) Anmeldetag: 17.12.2014
(51) Int. Cl.: C08L 9/00, B60C 1/00

(54) **Verfahren zur Herstellung einer Kautschukmischung, Kautschukmischung und Fahrzeugluftreifen**
Method for producing a rubber mixture, rubber mixture and pneumatic tyre for a vehicle
Procédé de fabrication d'un mélange de caoutchouc, mélange de caoutchouc et pneu de véhicule

(30) Priorität: 10.02.2014 DE 102014202320
(43) Veröffentlichungstag der Anmeldung: 12.08.2015
(73) Patentinhaber: Continental Reifen Deutschland GmbH, 30165 Hannover (DE)
(72) Erfinder: Jeromin, Dieter, 30419 Hannover (DE); Rennmann, Tim, 30177 Hannover (DE)
(74) Vertreter: Finger, Karsten

(56) Entgegenhaltungen:
- WO-A1-2009/037236
- US-A1- 2002 177 650
- US-A1- 2003 191 249
- US-A1- 2010 036 023
- US-A1- 2010 227 968
- US-A1- 2012 175 033
- D W Krassowski ET AL: ""Expandable Graphite Flake as an Additive for a New Flame Retardant Resin"", , 1. November 2012 (2012-11-01), XP055196861, Gefunden im Internet: URL:http://www.graftech.com/wp-content/upl oads/2015/03/GRAFGUARD-Expandable-Graphite -Flake-as-an-Additive-for-a-New-Flame-Reta rdant-Resin.pdf [gefunden am 2015-06-18]

## Beschreibung

Die Erfindung betrifft ein Verfahren zur Herstellung einer Kautschukmischung enthaltend Graphen und/oder Graphit, eine Kautschukmischung sowie einen Fahrzeugluftreifen, enthaltend die Kautschukmischung, insbesondere in der Innenschicht.

Im Stand der Technik ist bekannt, dass Graphit oder Blähgraphit in Kautschukmischungen, insbesondere für die Innenschicht (auch Innerliner oder Innenseele genannt) von Fahrzeugluftreifen, Vorteile hinsichtlich der Luftdichtigkeit dieser Mischungen zeigen.
So offenbaren beispielsweise die EP 2162298 B1 und die US 8304482 B2 Kautschukmischungen für die Innenschicht von Fahrzeugluftreifen auf Basis eines Butylkautschuks, die weiterhin Graphit enthalten.
In der US 7923491 B2 wird die Verwendung eines Elastomer/Graphen-Gemisches zur Herstellung einer Kautschukmischung für die Innenschicht von Fahrzeugluftreifen beschrieben.
Allerdings ist das Einmischen von Graphen aufgrund der geringen Dichte und dem dadurch erforderlichen sehr hohen Volumen mit den im Stand der Technik bekannten Vorrichtungen zur Herstellung von Kautschukmischungen, insbesondere für Fahrzeugluftreifen, problematisch.
In der EP 21962298 B1 wird expandiertes Graphit als Bestandteil der Kautschukmischung genannt. Da expandiertes Graphit Graphen oder Graphen-ähnliche Strukturen aufweist, ist hier wieder die geringe Dichte problematisch.
Denkbar wäre der Einsatz von pelletiertem Graphen bzw. geblähtem Blähgraphit. Einer der Nachteile solcher Pellets ist jedoch insbesondere die relativ schlechte Dispergierbarkeit des darin enthaltenen Graphens/Graphits, da die Pellets erst aufgebrochen werden müssen. Eine sehr gute Dispergierbarkeit und Homogenität ist für die Luftdichtigkeit von entscheidender Bedeutung.

In der WO 2010/016976 A1 wird die Verwendung von Blähgraphit (expandable graphite) in Kautschukmischungen für Innenschichten von Fahrzeugluftreifen auf Basis von Butylkautschuk beschrieben. Die in der WO 2010/016976 A1 offenbarte Blähgraphite weisen eine vergleichsweise hohe Expansionstemperatur auf, wobei z.B. das Vorblähen des Blähgraphites bei 700 °C beschrieben ist.
Für die Herstellung von luftdichten Innenschichten von Fahrzeugluftreifen in industriellem Maßstab ist ein Verfahren mit einem zusätzlichen Schritt mit derartig hohen Expansionstemperaturen jedoch kostspielig und zeitaufwändig. Außerdem weist expandiertes vorgeblähtes Blähgraphit wieder den Nachteil der niedrigen Dichte auf. Entsprechende Pellets hätten den Nachteil der Dispergierbarkeit.

Der Erfindung liegt auf Basis des Standes der Technik die Aufgabe zu Grunde, ein Verfahren zur Herstellung einer Kautschukmischung enthaltend Graphen und/oder Graphit bereitzustellen, welches vergleichsweise einfach bezüglich der Handhabbarkeit der einzusetzenden Materialien und kostengünstig ist. Außerdem muss eine sehr gute Dispersion von Graphit/Graphen sichergestellt werden, um die erforderliche Luftdichtigkeit sicherzustellen.

Gelöst wird diese Aufgabe erfindungsgemäß dadurch, dass das Verfahren wenigstens die folgenden Verfahrensschritte enthält:
a) Zugabe wenigstens eines Dienkautschuks in eine Mischvorrichtung
   und
b) Zugabe wenigstens eines expandierbaren Blähgraphits
   und
c) Mischen von wenigstens einem Dienkautschuk mit wenigstens einem expandierbaren Blähgraphit
   und
d) Erwärmen auf mehr als 150 °C
   und
e) Abkühlen des Dienkautschuk/Blähgraphit-Gemisches auf weniger als 90 °C
   und
f) Mischen des abgekühlten Dienkautschuk/Blähgraphit-Gemisches mit weiteren Zusatzstoffen.

Durch das erfindungsgemäße Verfahren ist es möglich, Graphen und/oder Graphit (Graphen-ähnliche Strukturen wie unten beschrieben) in einer Kautschukmischung zu erzeugen, ohne Graphen als Ausgangsmaterial einsetzen zu müssen, und zudem eine sehr homogene Verteilung des Graphits/Graphens in der Mischung zu erzielen. Blähgraphit ist gut handhabbar und lässt sich vergleichsweise gut einmischen. In Verfahrensschritt c) wird es im Dienkautschuk vorverteilt, sodass es in der mit dem Verfahren hergestellten Kautschukmischung homogen verteilt ist.
Das erfindungsgemäße Verfahren ermöglicht daher die Herstellung einer luftdichten Kautschukmischung für die Innenschicht von Fahrzeugluftreifen, wobei die luftdichten Eigenschaften von Graphen optimal genutzt werden.

Die zeitliche Reihenfolge der Verfahrensschritte ist nur bedingt vorgegeben, wie unten erläutert wird.
Im Folgenden werden die Verfahrensschritte des erfindungsgemäßen Verfahrens beschrieben.

In Verfahrensschritt a) des erfindungsgemäßen Verfahrens wird wenigstens ein Dienkautschuk in eine Mischvorrichtung zugegeben.
Hierbei ist es bevorzugt, dass die Mischvorrichtung vor der Zugabe des Dienkautschuks im Wesentlichen frei von sonstigen Bestandteilen einer Kautschukmischung ist. Im Wesentlichen frei von sonstigen Bestandteilen bedeutet, dass zwar keine anderen Bestandteile in der Mischvorrichtung vorgelegt wurden, aber etwaige Verunreinigungen, wie insbesondere Ruß, in geringen Mengen wie 0 bis 0,001 phr (phr: parts per hundred parts of rubber bezogen auf den Kautschuk der hergestellten Kautschukmischung), in der Mischvoruchtung vorhanden sein können.

In Verfahrensschritt b) des erfindungsgemäßen Verfahrens wird wenigstens ein expandierbares Blähgraphit zugegeben. Bevorzugt erfolgt der Verfahrensschritt b) nach dem Verfahrensschritt a), sodass das Blähgraphit bevorzugt dem bereits vorhandenen Dienkautschuk zugegeben wird.

Unter Blähgraphit wird im Rahmen der vorliegenden Erfindung Graphit mit einer Schichtgitterstruktur verstanden, bei dem zwischen den Schichten Atome oder Moleküle, insbesondere Schwefel- oder Stickstoffverbindungen, eingelagert, auch interkaliert genannt, sind. Bevorzugt sind wenigstens Schwefelsäure-Moleküle, also Moleküle der Summenformel H₂SO₄, im Blähgraphit interkaliert.
Gemäß Römpp Online Lexikon, Version 3.36 bezeichnet man "als Graphen... eine planare, hexagonale Anordnung von Kohlenstoff-Atomen, die in ihrer Struktur einer monomolekularen Schicht Graphit entspricht (Wabenstruktur)."
Somit befinden sich beim expandierbaren Blähgraphit zwischen einzelnen Graphen-Lagen die interkalierten Verbindungen. Im Idealfall befindet sich die interkalierte Verbindung zwischen jeder Monolage des Graphits. Im Realfall ist es jedoch denkbar, dass einige Graphit-Schichten keine interkalierten Verbindungen aufweisen.
Beim Erwärmen, wie beim erfindungsgemäßen Verfahren in Verfahrensschritt d) wie unten beschrieben, expandiert das expandierbare Blähgraphit räumlich, wodurch die interkalierte Verbindung, bevorzugt wenigstens eine Stickstoff oder Schwefelverbindung, vorzugsweise SO₂ und/oder H₂SO₄, bzw. Derivate davon freigesetzt werden und zudem Graphen-Strukturen als feste Rückstände entstehen. Diese Strukturen treten im Idealfall hauptsächlich auf, wobei es aber auch denkbar ist, dass feste Rückstände entstehen, bei denen noch einige Graphit-Lagen zusammenhaften (s. oben), sodass Graphit mit Graphen-ähnlichen Strukturen und/oder Graphen im Gemisch vorliegen können. Die freigesetzten Verbindungen verdampfen überwiegend und werden auch als Blähgas bezeichnet.

Das bei dem erfindungsgemäßen Verfahren verwendete expandierbare Blähgraphit kann jedes dem Fachmann bekannte Blähgraphit sein. Bevorzugt weist es eine Expansionstemperatur von 150 °C bis 1000 °C auf. Hierbei bedeutet Expansionstemperatur die spezifizierte Starttemperatur für die Expansion.
Besonders bevorzugt weist das Blähgraphit eine Expansionstemperatur von 150 °C bis 250 °C auf. Insbesondere sind Expansionstemperaturen von 150 °C bis 250 °C vergleichsweise niedrig, sodass eine wirtschaftlich sinnvolle Produktion der Kautschukmischung und daraus gefertigter Fahrzeugluftreifen in industriellem Maßstab möglich ist.
Beispielsweise kann ein Blähgraphit mir einer vergleichsweise niedrigen Expansionstemperatur eingesetzt werden, wie z.B. das Blähgraphit ES 200 F5 L der Fa. AMG Mining, welches eine spezifizierte Starttemperatur für die Expansion (Expansionstemperatur) von 150 bis 180 °C aufweist. Die Expansion findet natürlich auch bei höheren Temperaturen als der spezifizierten Starttemperatur statt. Letztere gibt lediglich einen Temperaturbereich an, der wenigstens erforderlich ist, um die Expansion ablaufen zu lassen.
Generell gilt, dass die Expansion schneller abläuft, je höher die Temperatur ist.
Aus der TGA-Kurve (TGA = Thermogravimetusche Analyse) eines Blähgraphits kann die optimale Temperatur bestimmt werden.

In Verfahrensschritt c) des erfindungsgemäßen Verfahrens wird der in Verfahrensschritt a) zugegebene wenigstens eine Dienkautschuk mit dem in Verfahrensschritt b) zugegebenem wenigstens einem expandierbarem Blähgraphit vermischt. Der Verfahrensschritt c) erfolgt also zeitlich nach den Verfahrensschritten a) und b).

Bei dem Dienkautschuk in den Verfahrensschritten a) und c) kann es sich um jeden dem Fachmann bekannten Dienkautschuk handeln. Hierbei ist es erfindungswesentlich, dass wenigstens ein Dienkautschuk verwendet wird, wobei es denkbar ist, dass zwei oder mehr Dienkautschuke im Verschnitt verwendet werden.
Bevorzugt weist der oder die eingesetzten Dienkautschuk(e) ein hohes Molekulargewicht von wenigstens 200000 g/mol oder mehr bezogen auf die ungekoppelte Einzelkette des Polymers auf. Hierbei ist die Grenze des Molekulargewichtes nach oben offen, da das Molekulargewicht so hoch wie möglich sein sollte. Es hat sich herausgestellt, dass ein Dienkautschuk mit einem Molekulargewicht von mindestens 200000 g/mol die Temperatur in Verfahrensschritt d) gut halten kann, wodurch insbesondere im Dienkautschuk/Blähgraphit-Gemisch eine homogene Expansion des Blähgraphites erfolgen kann.

Bevorzugt ist der Dienkautschuk ausgewählt aus der Gruppe bestehend aus Styrol-Butadien-Kautschuk (SBR) und/oder Butadien-Kautschuk (BR) und/oder Naturkautschuk (NR, natürliches Polyisopren) und/oder synthetischem Polyisopren (IR). Bei dem Styrol-Butadien-Kautschuk kann es sich um emulsionspolymerisierten Styrol-Butadien-Kautschuk (ESBR) oder lösungspolymerisierten Styrol-Butadien-Kautschuk (SSBR) handeln. Ferner ist es denkbar, dass ein Verschnitt aus zwei oder mehr der genannten Kautschuke verwendet wird.
Bevorzugt wird somit in den Verfahrensschritten a) und c) insbesondere aufgrund der für Kautschuke im Anwendungsbereich Fahrzeugluftreifen vergleichsweise hohen Temperaturen in Verfahrensschritt d) auf
(Halo-)Butylkautschuk verzichtet, welcher in Innenschichten von Fahrzeugluftreifen üblicherweise verwendet wird. (Halo-)Butylkautschuk erhöht zwar die Luftdichtigkeit einer Kautschukmischung, allerdings ist er nicht stabil gegenüber hohen Temperaturen, sodass er in Verfahrensschritt d) stark abgebaut würde.

Besonders bevorzugt wird in Verfahrensschritt a) wenigstens ein Styrol-Butadien-Kautschuk als Dienkautschuk eingesetzt und somit in Verfahrensschritt c) mit dem expandierbaren Blähgraphit vermischt. Styrol-Butadien-Kautschuk hat den Vorteil, dass er gegenüber anderen Dienkautschuken eine sehr hohe Beständigkeit gegenüber hohen Temperaturen und Oxidation aufweist, sodass er bei den, gegenüber normalen Mischtemperaturen von bis zu 150 °C vergleichsweise hohen Temperaturen von mehr als 150 °C in Verfahrensschritt d) keinen oder nur in sehr geringem Maße einen Abbau der Polymerketten zeigt.

Die Dauer des Mischens gemäß Verfahrensschritt c) beträgt bevorzugt 1 bis 8 Minuten, besonders bevorzugt 2 bis 6 Minuten, ganz besonders bevorzugt 2 bis 5 Minuten und in einer wiederum ganz besonders bevorzugten Ausführungsform 4 Minuten. Hierdurch wird in einer für die Produktion in industriellem Maßstab wirtschaftlichen Zeit eine gute Durchmischung von Dienkautschuk und expandierbarem Blähgraphit und damit eine homogene Verteilung des expandierbaren Blähgraphites in dem Dienkautschuk erzielt und das Polymersystem des Dienkautschuks insbesondere im Hinblick auf die Temperatur in Verfahrensschritt d) so wenig wie möglich potentiell thermisch geschädigt.

Gemäß Verfahrensschritt d) wird auf Temperaturen von mehr als 150 °C erwärmt. Zumindest nach dem Verfahrensschritt d) beträgt daher die Temperatur der zu diesem Zeitpunkt in der Mischvorrichtung enthaltenen Materialien mehr als 150 °C.

Gemäß einer bevorzugten Ausführungsform der Erfindung werden die Verfahrensschritte a) bis d) in folgender zeitlicher Abfolge durchgeführt:
1. a) (Verfahrensschritt a) als ersten dieser vier Verfahrensschritte)
2. b) (Verfahrensschritt b) nach Verfahrensschritt a))
3. c) (Verfahrensschritt c) nach Verfahrensschritt b))
4. d) (Verfahrensschritt d) nach Verfahrensschritt c)).

Vor dem Verfahrensschritt a) können zudem andere Verfahrensschritte erfolgen, wie z.B. ein Erwärmen der Mischvorrichtung.
Nach dem Verfahrensschritt d) erfolgen die Verfahrensschritte e) und f) zeitlich in der genannten Reihenfolge.
In dieser Ausführungsform der Erfindung wird also das in c) erzeugte Dienkautschuk/Blähgraphit-Gemisch auf Temperaturen von mehr als 150 °C erwärmt.

Gemäß einer weiteren bevorzugten Ausführungsform der Erfindung werden die Verfahrensschritte a) bis d) in folgender zeitlicher Abfolge durchgeführt:
1. a) (Verfahrensschritt a) als ersten dieser vier Verfahrensschritte)
2. d) (Verfahrensschritt d) nach Verfahrensschritt a))
3. b) (Verfahrensschritt b) nach Verfahrensschritt d))
4. c) (Verfahrensschritt c) nach Verfahrensschritt b)).

Vor dem Verfahrensschritt a) können zudem andere Verfahrensschritte erfolgen, wie z.B. ein Erwärmen der Mischvorrichtung.
Nach dem Verfahrensschritt d) erfolgen die Verfahrensschritte e) und f) zeitlich in der genannten Reihenfolge.
In dieser Ausführungsform der Erfindung wird also der in Schritt a) wenigstens eine zugegebene Dienkautschuk auf mehr als 150 °C erwärmt und anschließend das wenigstens eine Blähgraphit in Schritt b) zugegeben.

Es ist ferner denkbar, dass sowohl der Dienkautschuk alleine als auch das Dienkautschuk/Blähgraphit-Gemisch erwärmt werden. Dies ist auch durch die genannten Ausführungsformen umfasst, da diese lediglich eine Mindestzahl- und Reihenfolge an Verfahrensschritten angeben.
Gemäß Verfahrensschritt d) des erfindungsgemäßen Verfahrens wird auf Temperaturen von mehr als 150 °C erwärmt.
Das Erwärmen hat den Zweck, eine ausreichend hohe Temperatur bereitzustellen, damit das Blähgraphit expandieren kann. Hierdurch entsteht aus dem expandierbaren Blähgraphit expandiertes Blähgraphit, bzw. wie oben beschrieben Graphen und/oder Graphit mit Graphen-ähnlichen Strukturen.
Hierbei ist es gemäß der oben genannten Ausführungsformen sowohl denkbar, dass das Blähgraphit in den erwärmten Dienkautschuk gegeben wird, als auch, dass ein Dienkautschuk/Blähgraphit-Gemisch erwärmt wird.

Bevorzugt wird in Verfahrensschritt d) auf mehr als 180 °C, besonders bevorzugt 180 °C bis 240 °C, ganz besonders bevorzugt 195 bis 220 °C erwärmt.
Hierdurch wird eine ausreichend hohe Temperatur bereitgestellt, sodass möglichst alle Blähgraphit-Partikel expandieren und möglichst viel Graphen gebildet wird, wobei gleichzeitig eine wirtschaftlich sinnvolle Produktion in industriellem Maßstab möglich ist. Gemäß einer bevorzugten Ausführungsform der Erfindung wird in Verfahrensschritt d) auf 200 °C bis 220 °C erwärmt, wodurch mit einem vergleichsweise geringen Energieaufwand die Expansion des Blähgraphites gewährleistet ist. Bevorzugt wird hierbei ein Blähgraphit mit einer spezifizierten Starttemperatur der Expansion von 150 bis 200 °C, bevorzugt 150 bis 180 °C eingesetzt.

Die Verfahrens schritte a) bis d) werden aus wirtschaftlichen Gründen bevorzugt direkt nacheinander in der gleichen Mischvorrichtung durchgeführt, wobei jede dem Fachmann für die Herstellung von Kautschukmischungen insbesondere für die Anwendung in Fahrzeugluftreifen bekannte Mischvorrichtung denkbar ist. Bevorzugt ist die Mischvorrichtung ein Innenmischer oder ein Extruder wie z.B. ein Doppelschneckenextruder.
Besonders bevorzugt ist die Mischvorrichtung ein Innenmischer, da hier das entstehende Blähgas gut abgeleitet werden kann und eine bestimmte Verweilzeit bei einer bestimmten Temperatur (beispielsweise 4 Minuten bei 215 °C) leichter gewährleistet werden kann als z.B. in einem Doppelschneckenextruder.

Gemäß Verfahrensschritt e) wird das Dienkautschuk/Blähgraphit-Gemisch nach der Expansion des Blähgraphites auf weniger als 90 °C, bevorzugt 20 bis 90 °C, besonders bevorzugt 20 bis 80 °C abgekühlt. Dies kann sowohl innerhalb als auch außerhalb der Mischvorrichtung erfolgen. Zur leichteren Abführung der restlichen Blähgase ist ein Abkühlen außerhalb der Mischvorrichtung vorteilhaft. Somit erlangt das Gemisch eine ausreichend geringe Temperatur, um in weiteren Verfahrensschritten mit temperaturempfindlichen Bestandteilen vermischt zu werden, wie insbesondere Vulkanisationschemikalien.
Die Dauer des Verfahrensschrittes e) beträgt bevorzugt 1 bis 20 Minuten, besonders bevorzugt 1 bis 10 Minuten, ganz besonders bevorzugt 2 bis 5 Minuten und gemäß einer wiederum ganz besonders bevorzugten Ausführungsform der Erfindung 4 Minuten. Hierdurch wird eine ausreichende Abkühlung des genannten Gemisches erzielt, wobei nicht zu lange Warte- und Lagerungszeiten entstehen und eine schnelle Weiterverarbeitung im Sinne eines wirtschaftlich sinnvollen Verfahrens ermöglicht ist.

Gemäß Verfahrensschritt f) wird das abgekühlte Dienkautschuk/Blähgraphit-Gemisch weiteren Zusatzstoffen vermischt. Verfahrensschritt f) erfolgt in einer Mischvorrichtung, die jede dem Fachmann für die Herstellung von Kautschukmischungen insbesondere für die Anwendung in Fahrzeugluftreifen bekannte Mischvorrichtung sein kann. Bevorzugt ist die Mischvorrichtung ein Innenmischer oder ein Extruder wie z.B. ein Doppelschneckenextruder.
Besonders bevorzugt ist die Mischvorrichtung ein Innenmischer, da hier das entstehende Blähgas gut abgeleitet werden kann und eine bestimmte Verweilzeit bei einer bestimmten Temperatur leichter gewährleistet werden kann als z.B. in einem Doppelschneckenextruder.

Unter weiteren Zusatzstoffen sind alle dem Fachmann bekannten Zusatzstoffe für Kautschukmischungen von Fahrzeugluftreifen, insbesondere für Kautschukmischungen von Innenschichten von Fahrzeugluftreifen, zu verstehen.
Hierbei handelt es sich insbesondere um wenigstens einen Füllstoff und/oder wenigstens einen Weichmacher und/oder wenigstens ein Alterungsschutzmittel und/oder wenigstens ein Prozesshilfsmittel und/oder wenigstens ein Aktivator und/oder wenigstens ein Vulkanisationssystem bestehend aus Vulkanisationschemikalien.
Die Vulkanisationschemikalien sind insbesondere Schwefel und/oder wenigstens ein Beschleuniger und/oder wenigstens ein Vulkanisationsverzögerer.

Dabei ist der Beschleuniger ausgewählt aus der Gruppe enthaltend Thiazolbeschleuniger und/oder Mercaptobeschleuniger und/oder Sulfenamidbeschleuniger und/oder Thiocarbamatbeschleuniger und/oder Thiurambeschleuniger und/oder Thiophosphatbeschleuniger und/oder Thioharnstoffbeschleuniger und/oder Xanthogenat-Beschleuniger und/oder Guanidin-Beschleuniger.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Bei dem Füllstoff kann es sich um alle dem Fachmann bekannten Typen handeln, wie insbesondere Ruße und/oder Kieselsäure und/oder Silikate.

Bevorzugt wird in Verfahrensschritt f) wenigstens ein Füllstoff zugegeben. Die Zugabe in diesem Verfahrensschritt ist deshalb bevorzugt, da sich ein Füllstoff positiv auf die Eigenschaften, insbesondere die Festigkeit, der hergestellten Kautschukmischung auswirkt und die Zugabe zu einem früheren Zeitpunkt nachteilig ist. Insbesondere vor dem Verfahrensschritt c) würde der Füllstoff dazu führen, dass sich die Kautschukmischung aufgrund der auftretenden Scherkräfte beim Verteilen von Kautschuk und Füllstoff stark erwärmt, sodass eine genaue Temperatursteuerung problematisch wäre. Die Temperatur der Kautschukmischung beim Mischen von wenigstens einem Dienkautschuk mit wenigstens einem Blähgraphit soll zwar so hoch wie nötig sein, um das Blähgraphit gut zu verteilen und ggf. bei vorgewärmtem Dienkautschuk die Expansion zu starten. Allerdings soll die Temperatur auch nicht zu hoch sein, um einen unerwünschten Abbau der Polymerketten des Kautschuks zu vermeiden.

Bevorzugt wird in Verfahrensschritt f) wenigstens ein Vulkanisationssystem bestehend aus den oben genannten Vulkanisationschemikalien zugegeben. Insbesondere Vulkanisationschemikalien sind temperaturempfindlich, sodass die Zugabe zu einem früheren Zeitpunkt (bei höheren Temperaturen) unerwünschte Zersetzungsprozesse und/oder eine unerwünschte Vorvernetzung (Scorching) auslösen würde.

Gemäß einer bevorzugten Weiterbildung der Erfindung wird in Verfahrens schritt f) das abgekühlte Dienkautschuk/Blähgraphit-Gemisch zusätzlich zu den Zusatzstoffen mit wenigstens einem weiteren Dienkautschuk vermischt.

Bei dem weiteren Dienkautschuk gemäß Verfahrensschritt f) kann es sich um jeden dem Fachmann bekannten Dienkautschuk handeln, wobei es denkbar ist, dass zwei oder mehr Dienkautschuke im Verschnitt verwendet werden.
Bevorzugt ist der weitere Dienkautschuk ausgewählt aus der Gruppe bestehend aus ButylKautschuk und/oder Halobutylkautschuk und/oder Styrol-Butadien-Kautschuk (SBR) und/oder Butadien-Kautschuk (BR) und/oder Naturkautschuk (NR, natürliches Polyisopren) und/oder synthetischem Polyisopren (IR). Bei dem Styrol-Butadien-Kautschuk kann es sich um emulsionspolymeusierten Styrol-Butadien-Kautschuk (ESBR) oder lösungspolymerisierten Styrol-Butadien-Kautschuk (SSBR) handeln. Ferner ist es denkbar, dass ein Verschnitt aus zwei oder mehr der genannten Kautschuke verwendet wird.

Gemäß einer bevorzugten Ausführungsform der Erfindung wird in Verfahrensschritt f) wenigstens ein Butylkautschuk und/oder wenigstens ein Halobutylkautschuk, bevorzugt wenigstens ein Halobutylkautschuk, als weiterer Dienkautschuk zugegeben und mit dem abgekühlten Dienkautschuk/Blähgraphit-Gemisch und den weiteren Zusatzstoffen vermischt. Hierdurch wird aufgrund des Halobutylkautschuks eine zusätzliche Verbesserung der Luftdichtigkeit der Kautschukmischung erzielt, ohne dass der Halobutylkautschuk den für die Expansion des expandierbaren Blähgraphits notwendigen hohen Temperaturen ausgesetzt wird.

Gemäß einer weiteren bevorzugten Ausführungsform der Erfindung wird in Verfahrensschritt f) Styrol-Butadien-Kautschuk als weiterer Dienkautschuk verwendet.

Gemäß einer weiteren bevorzugten Ausführungsform der Erfindung wird in den Verfahrensschritten a), c) und f) nur Styrol-Butadien-Kautschuk als Dienkautschuk verwendet, sodass die mit dem erfindungsgemäßen Verfahren hergestellte Kautschukmischung 100 phr SBR enthält, wobei es sich auch hier um einen Verschnitt verschiedener SBR-Typen, z.B. SSBR ESBR, handeln kann.

Bevorzugt wird die mit dem erfindungsgemäßen Verfahren hergestellte Kautschukmischung in Fahrzeugluftreifen, insbesondere wenigstens der Innenschicht von Fahrzeugluftreifen, verwendet. Hierdurch wird die Luftdichtigkeit des in der hergestellten Kautschukmischung homogen verteilten Graphen und/oder Graphits mit Graphen-ähnlichen Strukturen nutzbar gemacht.

Eine weitere Aufgabe, die der vorliegenden Erfindung zugrunde liegt, besteht darin, eine Kautschukmischung bereitzustellen, die im Vergleich zum Stand der Technik einfacher und kostengünstiger hergestellt ist und zudem eine sehr gute Luftdichtigkeit aufweist.

Gelöst wird diese Aufgabe durch eine Kautschukmischung, die mit dem erfindungsgemäßen Verfahren, wie oben beschrieben, hergestellt wurde. Hierbei gelten alle oben genannten Ausführungsformen und technischen Vorteile, insbesondere die die Kautschukmischung betreffen.

Eine weitere Aufgabe, die der vorliegenden Erfindung zugrunde liegt, besteht darin, einen Fahrzeugluftreifen bereitzustellen, der im Vergleich zum Stand der Technik einfach und kostengünstig hergestellt wurde und sich durch eine sehr gute Luftdichtigkeit auszeichnet.

Gelöst wird diese Aufgabe erfindungsgemäß dadurch, dass der Fahrzeugluftreifen wenigstens in der Innenschicht wenigstens eine Kautschukmischung, die mit dem oben beschriebenen erfindungsgemäßen Verfahren hergestellt wurde, aufweist. Hierbei gelten alle oben genannten Ausführungsformen und technischen Vorteile, insbesondere die die Kautschukmischung betreffen.

Im Folgenden soll das erfindungsgemäße Verfahren anhand eines Beispiels erläutert werden.

Die damit hergestellte erfindungsgemäße Kautschukmischung E1 wurde auf ihre Luftdichtigkeit (Luftpermeabilität in Anlehnung an DIN 53 536 bei 70 °C Lufttemperatur) überprüft.

Als Vergleich dient eine Kautschukmischung V1, die kein Blähgraphit enthält. Ausführungsbeispiel des erfindungsgemäßen Verfahrens:
a) Zugabe von Styrol-Butadien-Kautschuk in eine im Stand der Technik bekannte Mischvorrichtung, Angaben zum SBR s. unterhalb Tabelle 1
b) Zugabe von expandierbarem Blähgraphit, Angaben s. unterhalb Tabelle 1
c) Mischen (Dispersion, Homogenisierung) des Styrol-Butadien-Kautschuks mit dem expandierbaren Blähgraphit unter Zuhilfenahme einer Lüftung; Beibehaltung der Rotorgeschwindigkeit erhöht die Temperatur, um die Blähreaktion (Expansion des Blähgraphits) zu starten
d) Erwärmen auf 160 bis 215 °C für 3 Minuten zur Steuerung des Blähprozesses
e) Auswerfen der Mischung und kontrolliertes Abkühlen auf 30 °C
f) Mischen des abgekühlten Dienkautschuk/Blähgraphit-Gemisches mit weiteren Zusatzstoffen, s. Tabelle 1, wobei die Vulkanisationschemikalien (Schwefel, Beschleuniger) in einem weiteren Mischstufe wie im Stand der Technik bekannt zu gegeben werden.

**Tabelle 1**

| Bestandteile | Einheit | V1 | E1 |
|---|---|---|---|
| SBR ^{a)} | phr | 100 | 100 |
| Blähgraphit ^{b)} | phr | - | 10 |
| Ruß N339 | phr | 50 | 50 |
| Verarbeitungshilfsmittel ^{c)} | phr | 17 | 17 |
| Alterungsschutzmittel ^{d)} | phr | 2,5 | 2,5 |
| Stearinsäure | phr | 1,5 | 1,5 |
| Zinkoxid | phr | 3,0 | 3,0 |
| Beschleuniger ^{e}) | phr | 1,5 | 1,5 |
| Schwefel | phr | 2,0 | 2,0 |
| **Eigenschaften** | | | |
| Gaspermeabilität | 10E-17*m²/(Pa*sec) | 21,2 | 18,7 |

| | | | |
|---|---|---|---|
| ^{a)} SBR: Buna^{®} SB1500, Fa. Styron, Germany ^{b)} Blähgraphit: ES200 F5L, Fa. AMG Mining AG, Expansionstemperatur 150 bis 180 °C ^{c)} Verarbeitungshilfsmittel: Weichmacher, Harz ^{d)} Alterungsschutzmittel: 6PPD, TMQ ^{e)} Beschleuniger: CBS | | | |

Wie aus Tabelle 1 ersichtlich, zeigt die erfindungsgemäße Kautschukmischung E1, die mit dem vergleichsweise einfachen und kostengünstigen erfindungsgemäßen Verfahren hergestellt wurde, eine geringere Gaspermeabilität und damit eine verbesserte Luftdichtigkeit. Der erfindungsgemäße Fahrzeugluftreifen, der die erfindungsgemäße Kautschukmischung wenigstens in der Innenschicht enthält, weit somit eine verbesserte Luftdichtigkeit auf.

## Patentansprüche

1. Verfahren zur Herstellung einer Kautschukmischung , **dadurch gekennzeichnet, dass** das Verfahren wenigstens die folgenden Verfahrensschritte aufweist:
a) Zugabe wenigstens eines Dienkautschuks in eine Mischvorrichtung
und
b) Zugabe wenigstens eines expandierbaren Blähgraphits
und
c) Mischen von wenigstens einem Dienkautschuk mit wenigstens einem expandierbaren Blähgraphit
und
d) Erwärmen auf mehr als 150 °C
und
e) Abkühlen des Dienkautschuk/Blähgraphit-Gemisches auf weniger als 90 °C
und
f) Mischen des abgekühlten Dienkautschuk/Blähgraphit-Gemisches mit weiteren Zusatzstoffen.

2. Verfahren nach Anspruch 1, **dadurch gekennzeichnet, dass** es sich bei dem Dienkautschuk in den Verfahrensschritten a) und c) um wenigstens einen Styrol-Butadien-Kautschuk handelt.

3. Verfahren nach einem der vorherigen Ansprüche, **dadurch gekennzeichnet, dass** die Verfahrensschritte a) bis d) in folgender zeitlicher Abfolge durchgeführt werden:
1. a)
2. b)
3. c)
4. d).

4. Verfahren nach einem der Ansprüche 1 oder 2, **dadurch gekennzeichnet, dass** die Verfahrensschritte a) bis d) in folgender zeitlicher Abfolge durchgeführt werden:
1. a)
2. d)
3. b)
4. c).

5. Verfahren nach einem der vorherigen Ansprüche, **dadurch gekennzeichnet, dass** die Dauer des Verfahrensschrittes c) 1 bis 8 Minuten beträgt.

6. Verfahren nach einem der vorherigen Ansprüche, **dadurch gekennzeichnet, dass** in Verfahrensschritt d) auf 180 bis 240 °C erwärmt wird.

7. Verfahren nach einem der vorherigen Ansprüche, **dadurch gekennzeichnet, dass** in Verfahrensschritt f) das abgekühlte Dienkautschuk/Blähgraphit-Gemisch zusätzlich zu den Zusatzstoffen mit wenigstens einem weiteren Dienkautschuk vermischt wird.

8. Verfahren nach einem der vorherigen Ansprüche, **dadurch gekennzeichnet, dass** die hergestellte Kautschukmischung wenigstens in der Innenschicht von Fahrzeugluftreifen verwendet wird.

9. Kautschukmischung, **dadurch gekennzeichnet, dass** sie mittels eines Verfahrens nach einem der Ansprüche 1 bis 7 hergestellt wurde.

10. Fahrzeugluftreifen, enthaltend wenigstens in der Innenschicht wenigstens eine Kautschukmischung, die mittels eines Verfahrens nach einem der Ansprüche 1 bis 7 hergestellt wurde.

## Claims

1. Process for the production of a rubber mixture, **characterized in that** the process comprises at least the following steps:
a) addition of at least one diene rubber into a mixing device
and
b) addition of at least one expandable graphite
and
c) mixing of at least one diene rubber with at least one expandable graphite
and
d) heating to more than 150°C
and
e) cooling of the diene rubber/expandable graphite mixture to less than 90°C
and
f) mixing of the cooled diene rubber/expandable graphite mixture with other additives.

2. Process according to Claim 1, **characterized in that** the diene rubber in steps a) and c) is at least one styrene-butadiene rubber.

3. Process according to any of the preceding claims, **characterized in that** steps a) to d) are carried out in the following chronological sequence:
1. a)
2. b)
3. c)
4. d).

4. Process according to either of Claims 1 and 2, **characterized in that** steps a) to d) are carried out in the following chronological sequence:
1. a)
2. d)
3. b)
4. c).

5. Process according to any of the preceding claims, **characterized in that** the duration of the step c) is from 1 to 8 minutes.

6. Process according to any of the preceding claims, **characterized in that** in step d) the system is heated to from 180 to 240°C.

7. Process according to any of the preceding claims, **characterized in that** in step f) the cooled diene rubber/expandable graphite mixture is mixed not only with the additives but also with at least one other diene rubber.

8. Process according to any of the preceding claims, **characterized in that** the resultant rubber mixture is used at least in the internal layer of pneumatic tyres.

9. Rubber mixture, **characterized in that** it has been produced by means of a process according to any of Claims 1 to 7.

10. Pneumatic tyre comprising, at least in the internal layer, at least one rubber mixture produced by means of a process according to any of Claims 1 to 7.

## Revendications

1. Procédé pour la préparation d'une composition de caoutchouc, **caractérisé en ce que** le procédé comporte au moins les étapes de processus suivantes :
a) introduction d'au moins un caoutchouc diène dans un dispositif de mélange
et
b) addition d'au moins un graphite soufflé expansible
et
c) mélange d'au moins un caoutchouc diène avec au moins un graphite soufflé expansible
et
d) chauffage à plus de 150 °C
et
e) refroidissement du mélange de caoutchouc diène/ graphite soufflé jusqu'au-dessous de 90 °C
et
f) mélange du mélange refroidi de caoutchouc diène/ graphite soufflé avec d'autres additifs.

2. Procédé selon la revendication 1, **caractérisé en ce que** pour ce qui est du caoutchouc diène dans les étapes a) et c) du procédé, il s'agit d'au moins un caoutchouc styrène-butadiène.

3. Procédé selon l'une quelconque des revendications précédentes, **caractérisé en ce que** les étapes a) à d) du procédé sont effectuées dans l'ordre chronologique suivant :
1. a)
2. b)
3. c)
4. d).

4. Procédé selon l'une quelconque des revendications 1 et 2, **caractérisé en ce que** les étapes a) à d) du procédé sont effectuées dans l'ordre chronologique suivant :
1. a)
2. d)
3. b)
4. c).

5. Procédé selon l'une quelconque des revendications précédentes, **caractérisé en ce que** la durée de l'étape c) du procédé va de 1 à 8 minutes.

6. Procédé selon l'une quelconque des revendications précédentes, **caractérisé en ce que** dans l'étape d) du procédé on chauffe à une température de 180 à 240 °C.

7. Procédé selon l'une quelconque des revendications précédentes, **caractérisé en ce que** dans l'étape f) du procédé on mélange le mélange refroidi de caoutchouc diène/graphite soufflé avec, en plus des additifs, au moins un autre caoutchouc diène.

8. Procédé selon l'une quelconque des revendications précédentes, **caractérisé en ce que** la composition de caoutchouc préparée est utilisée au moins dans la couche interne de pneumatiques pour véhicules.

9. Composition de caoutchouc, **caractérisée en ce qu**'elle a été préparée par un procédé selon l'une quelconque des revendications 1 à 7.

10. Pneumatique pour véhicules, contenant au moins dans la couche interne au moins une composition de caoutchouc qui a été préparée par un procédé selon l'une quelconque des revendications 1 à 7.
